# EUROPEAN PATENT SPECIFICATION

(11) **EP 2 142 684 B1**
(45) Date of publication and mention of the grant of the patent: **25.04.2012**
(21) Application number: 08826568.1
(22) Date of filing: 30.04.2008
(51) Int. Cl.: C25B 1/00, C25B 3/04

(54) **OXYGEN GENERATION FOR BATTLEFIELD APPLICATIONS**
SAUERSTOFFERZEUGUNG FÜR SCHLACHTFELD-ANWENDUNGEN
GÉNÉRATION D'OXYGÈNE POUR DES APPLICATIONS DE CHAMP DE BATAILLE

(30) Priority: 03.05.2007 US 927595 P
(43) Date of publication of application: 13.01.2010
(73) Proprietor: BATTELLE MEMORIAL INSTITUTE, Columbus, OH 43201-2693 (US)
(72) Inventor: MONZYK, Bruce F., Jerome Township, OH 43015 (US); MARTIN, Peter M., Kennewick, WA 99338 (US); PESTAK, Christopher J., Brunswick, OH 44212 (US); CARLETON, Linda M., Dublin, OH 43016 (US); LUCAS, Eric A., Columbus, OH 43221 (US); CLARK, David N., Marysville, OH 43040 (US)
(74) Representative: Kador & Partner
(86) International application number: PCT/US2008/061961
(87) International publication number: WO 2009/014785

(56) References cited:
- WO-A1-2004/085708
- WO-A2-03/012261
- WO-A2-2007/027876
- WO-A2-2007/027876
- WO-A2-2007/092570
- US-A- 5 186 793
- US-A- 5 938 640
- US-A1- 2006 102 468

## Description

### FIELD OF THE INVENTION

The disclosed invention provides for advanced technology for the closed-loop regeneration of a breathing atmosphere and the management of carbon dioxide (CO₂) within a closed environment. The photolytically driven electro-chemistry (PDEC) technology disclosed herein has broad application both on Earth and in space. This invention is particularly useful in military (e.g. warfighter), emergency responder, first responder, space applications and in portable systems such as vehicles, housing, temporary camps, and the like, where system performance is safety critical. Important parameters provide for reduced mass, volume and power consumption of the system. Large scale applications are also contemplated.

### BACKGROUND OF THE INVENTION

Art related to the present invention includes US 6,866,755 to Monzyk et al.; WO 03/011,366 to Monzyk et al.; WO 03/011,445 to Monzyk et al.; WO 03/011,359 Monzyk et al.; WO 03/012,261 to Monzyk et al.; and WO 04/085,708 to Monzyk et al.

WO 2007/027876 A2 relates to a compact power supply system integrated with fuel generation/regeneration system that typically recycles C, H and O mass and where the energy for the process is supplied externally.

US 2006/0102468 A1 relates to a photolytically driven electrochemical ("PDEC") oxygenator and carbon dioxide and/or hydrogen separator that uses light energy to achieve gas exchange in various media.

### BRIEF DESCRIPION OF THE INVENTION

The present invention provides for a single step design for carbon dioxide removal and fixation using a cell incorporating a carbon dioxide selective film for active/passive transport while simultaneously producing oxygen. The invention is useful for battlefield applications, outer space and in hazardous environments. Further details of the invention are shown in the following text and Figures.

The invention provides for a photolytically energized electrochemical cell according to claim 1 and in some embodiments an air bladder typically disposed in the gas line providing oxygen laden gas to a user. Typically the electrochemical cell includes a light transparent window disposed on the light activated catalyst; .In some embodiments the electrochemical cell includes an ion conductive membrane disposed between the anode and cathode and typically has a catholyte bordering the cathode and/or a an anolyte bordering the anode. Other embodiments have a gas

permeable membrane that is selective for carbon dioxide so as to facilitate the conversion carbon dioxide from a gas flow to carbonaceous materials.

In yet other embodiments a living enclosure has a gas flow connecting the living enclosure to the gas flow chamber the electrochemical cell. Typically hydrogen ions flow from the anode to the cathode during operation through an electrolyte or through an anolyte contact with the light activated catalyst and a catholyte in contact with the cathode.

Another broad aspect of the invention includes a closed-loop air maintenance system including an enclosure for a human or animal; a separator for separating carbon dioxide from a gas flowing from the enclosure; and an electrochemical cell as described in claim 11. Typically, the air maintenance system has a gas porous or gas permeable cathode.

Respiratory protection is a vital capability on the battlefield. The inventive device is based on photolytically driven electro-chemistry (PDEC) technology. The inventive device allows a PDEC-based breathing atmosphere regeneration system that closes the loop on the respiration cycle, allowing the user to operate in a hazardous environment for extended periods.

The inventive device uses light energy to simultaneously generate O₂ and DC electrical energy, while removing CO₂ and H₂O from exhaled air purged from the closed-loop breathing system. The latter is accomplished by using the DC electrical energy to electrochemically transform the CO₂ and H₂O to form an effluent that could be either readily disposable or reusable. Such disposable effluents would be in the form of non-toxic, non-volatile, photo-electrochemically-reduced carbon-containing compounds. Alternately, the effluent of the CO₂ reduction system could be formulated to serve as a fuel (such as methanol, etc.) for an auxiliary fuel cell, which would augment battery power and thus further extend the potential mission duration. In either case, the device continuously and closes the mass balance on the respiration gas maintenance cycle without the use of expendables such as O₂ tanks and CO₂ sorbent cartridges, thereby isolating the user's respiratory system from the outside atmosphere.

The inventive device utilizes the H₂O and CO₂ contained in the user's expelled air as feedstock for the photolytic process, thus eliminating the need for stored gases, solids, or water consumables. The device outputs refreshed breathing air typically to an air bladder to be reused upon demand. The working duration of the device is be limited only by battery or other power, and can be designed to integrate with helmets, masks, and protective suits, or to operate as a stand-alone device. The high production efficiencies offered by PDEC technology will result in a form factor that enables the inventive respiratory protection device to be lighter and more compact, and to provide longer in-use durations than anything currently available. This will allow personnel to operate more freely and effectively, and for longer periods of time in hazardous or confined breathing atmosphere conditions than current technologies. The solid-state nature of the device makes it inherently rugged and suitable for use in the field. In addition, the reduction in the consumables required will greatly simplify the logistics of deploying and operating the device in the field.

The air regeneration rate the device achieves a catabolic production rate of CO₂, and typically ranges between about 8 and about 60 mg/s, with an average of 25 mg/s representing a moderate level of exertion for an average-sized person.

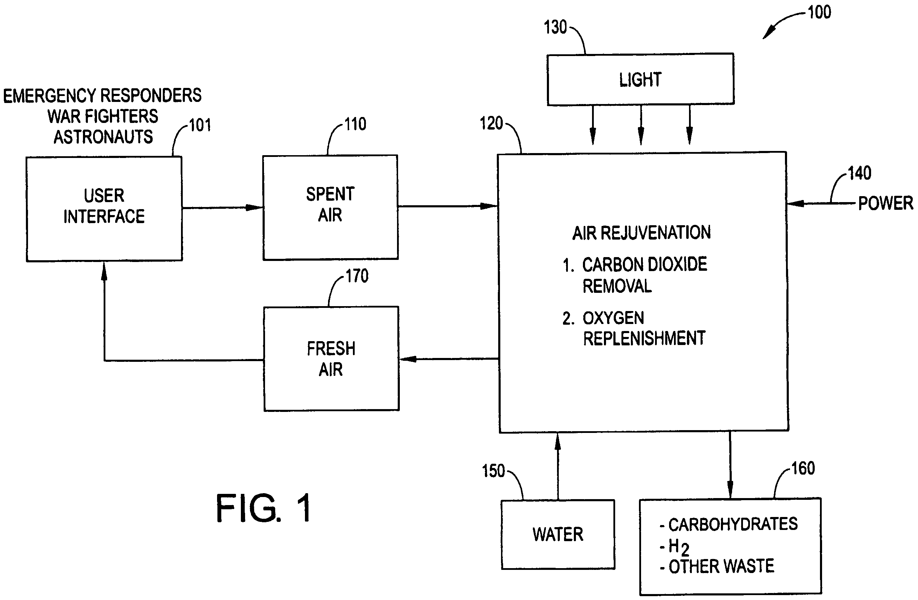

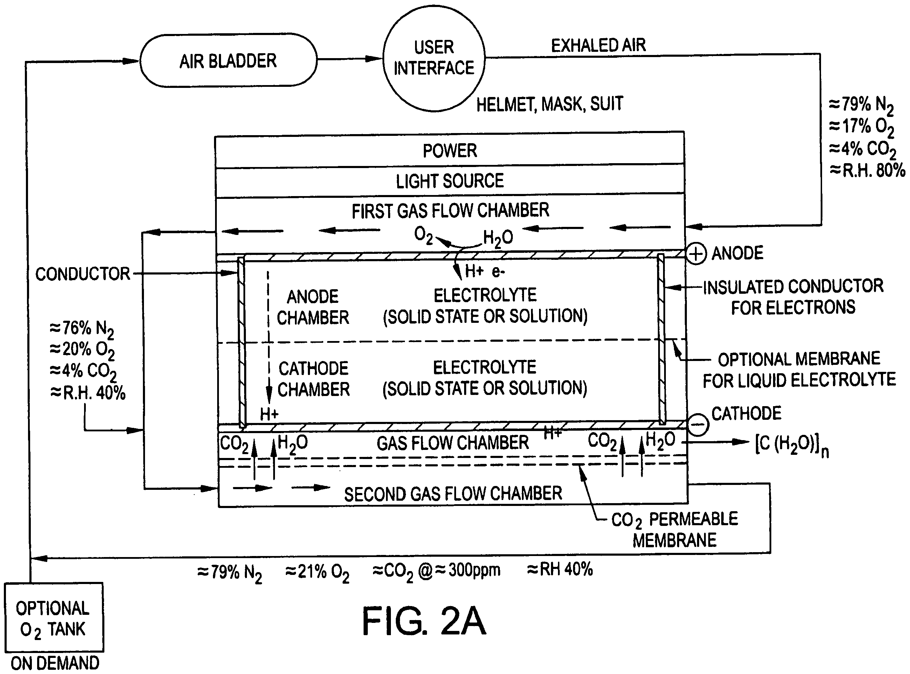

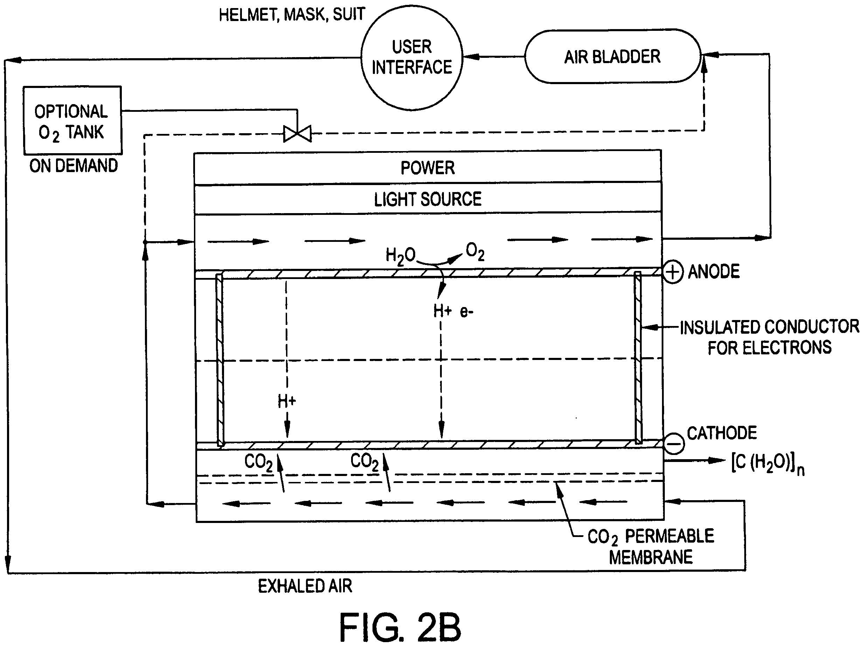

The inventive respiratory devices illustrated in the figures herein particularly Figure 1, 2A and 2B, uses battery or other portable power to generate light, which shines on a photocatalyst anode that simultaneously produces O₂ and DC electrical energy, while removing CO₂ and H₂O from exhaled air cycled through the closed-loop breathing system. The latter is accomplished by passing the DC electrical energy through a cathode to electrochemically transform the CO₂ and H₂O into some desired carbon-containing effluent. The device thereby continuously and completely closes the mass balance on the respiration gas maintenance cycle without the use of expendables such as O₂ tanks and CO₂ sorbent (rebreather) cartridges, thereby allowing the user's respiratory system to be completely isolated from the outside atmosphere for long periods.

The inventive device consists of four major subsystems: (1) the photocatalyst anode and O₂ production subsystem, (2) CO₂ separation subsystem, (3) CO₂ fixation cathode subsystem, and (4) the "balance-of-device" hardware, including an air pump, electronic sensors, valves, and controls, which integrates these subsystems together into an operational device. The achievable efficiencies of the anodic and cathodic chemistries determine the critical design parameters controlling the ultimate minimum size, weight, and power demands that can be achieved with the finished wearable module. The O₂ flux of the PDEC photocatalysts provides seven (7) times the O₂ flux of the human lung at a very good 1 percent quantum efficiency (10 percent quantum efficiency being excellent). The inventive system-level design analysis will focus on a device that meets the following key system level requirements: (1) minimizes weight, volume, and power consumption; (2) demonstrates sustained CO₂ removal from breathing atmosphere that can be scaled up to 60 mg/s in a TRL7 unit; (3) poses no hazard to the user; (4) accommodates bodily motions (running, physical exertions, etc.) and variable geometric orientations; (5) requires a low, infrequent level of maintenance; (6) produces a non-toxic, disposable, carbon-containing compound from the removed excess bodily products of CO₂ and H₂O; and (7) provides routine re-usability over years of use.

The PDEC photocatalyst provides the electrochemical power source for direct photoproduction and pressurization of O₂, CO₂ fixation, and H₂O removal from the expelled breathing air. Absorption of light energy by the photocatalyst, from an embedded, concealed lamp - preferably a white LED array or other source - promotes electrons of the robust ceramic photocatalyst into the semi-conductance band, causing DC electric current to flow and providing "holes" to oxidize water to O₂ and H⁺. Liberated electrons are used at a specially designed gas permeable cathode to convert CO₂ to the desired effluent. This effluent can be: (1) a disposable reduced carbon-containing product, or (2) an effluent formulated to serve as a fuel (such as methanol, etc.) for an auxiliary fuel cell.

### BRIEF DESCRIPTION OF THE DRAWINGS

Figure 1 is a schematic drawing of a broad overview of the invention showing major mass and energy flows.
Figure 2A is a schematic drawing of a typical PDEC unit for warfare or other applications according to one aspect of the invention wherein oxygen generation occurs first followed by carbon dioxide removal.
Figure 2B is a schematic drawing of a typical PDEC unit for warfare or other applications according to another aspect of the invention wherein carbon dioxide removal occurs first followed by oxygen generation.
Figure 3 is a graph depicting space suit carbon dioxide removal rate relationship of PDEC cathode area and cell stack volume (Modeling calculation results). Note that the total output is 25 mg CO₂ /second for each calculated data point (equiv. 29 mg O₂/second.
Figure 4 is a graph depicting space suit oxygen production relationship of PDEC catalyst area and cell stack volume. Note that the total output is 29 mg oxygen/second for each calculated data point (equiv. to 25 mg CO₂/second.
Figure 5 is a schematic diagram showing one version of a PDEC unit with a gas diffusion cathode. This allows the circulation of gas directly through the cell for removing excess CO₂ in air
Figure 6 is a schematic diagram of another aspect of the invention showing a PDEC cell with a gas diffusion cathode. Microporous hydrophobic polymers are typically used for the CO₂ selective film. A typical material is Teflon™. The process is a single step type design for carbon dioxide removal and fixation
Figure 7 is a schematic diagram of another aspect of the invention showing a two-step process for carbon dioxide removal from a gas stream involving capture followed by fixation. A carbon dioxide separator concentrates the carbon dioxide prior to flowing the carbon dioxide through the PDEC cell with the gas diffusion electrode.

### DETAILED DESCRIPTION OF THE INVENTION AND BEST MODE

Broadly the present invention provides for the production of oxygen and the removal of carbon dioxide in an enclosed space. The enclosed space is typically an enclosed helmet, a breathing mask, a space suit, a portable living area, a hazardous environmental suit, emergency or fire fighter suit, vehicles as well as large living areas. The invention is also useful for the mass, volume, and power consumption design constraints associated with enclosed living areas such as spacesuits for the Moon, Mars and in-space Extra-Vehicular Activity (EVA), as well as other highly constrained applications such as a portable breathing apparatus for emergency responders, coal miners and closed loop air regeneration systems for confined environments such as space vehicles, submarines, aircraft, battlefield vehicles, and compact, highly reliable, long-life systems that continuously regenerate fuel, food and/or a high-quality breathing atmosphere within a closed environment. With this invention CO₂ produced by animals or humans is captured and regenerated without the need for lithium hydroxide (LiOH) or lithium oxide (Li₂O) canisters or other logistically disadvantageous absorption devices.

Referring now to Figure 1, this figure illustrates the system 100 parameters in a typical black box representation. Details for the boxes are as follows. Users or inhabitants such as war fighters, emergency responders, astronauts or other workers are at a user interface 101 and produce spent air 110 reduced in oxygen content and enhanced in carbon dioxide content. The gases are sent to an air rejuvenation unit 120 where oxygen is replenished and carbon dioxide removed. Light input 130 and electrical power 140 typically drive the process. Carbon dioxide is typically converted to carbohydrates 160 for later use or treatment. Water 150 is used for oxygen production by the splitting of water r from water in the exhaled breath, additional makeup water, or both. Fresh air 170 enhanced in oxygen content and reduced in carbon dioxide returns to the user through user interface 101.

### Preliminary Considerations for Warfare and other Applications

PDEC is a platform technology that uses light energy to simultaneously bring about one or more useful chemical changes and generate electrical current. This technology also has tremendous potential application to the regeneration and maintenance of breathable air in a confined and/or toxic environment.

The chemistry that is the foundation for the inventive breathing protection device is photolytically-driven redox chemistry that is analogous to green plant photosynthesis. Fundamentally, PDEC works as follows. Absorption of a photon of light by a semiconductor photocatalyst leads to promotion of one of the electrons from the valence (non-mobile) electron band to the conduction (mobile) electron band. Removal of an electron (e⁻) from the valence band of the semiconductor then leaves behind a "hole" (h⁺), which is mobile within the valence band; both the h⁺ and e⁻ are free to migrate through the semiconductor to their point of reaction. The holes migrate to the O₂ generation subsystem, where two of them each then remove an electron from a water molecule, ultimately resulting in oxidation of the water to H⁺ ions and regenerated breathable O₂, as in Equation (1). The free, mobile electrons that result from photon absorption migrate to the CO₂ reduction subsystem, where, together with the H⁺ ions liberated in the O₂ regeneration system, they reduce or "fix" CO₂ to carbon-containing products that are easily separated from the system, as in Equation (2).

2h⁺ + H₂O → 2H⁺ + ½ O₂ (1)

CO₂ + (x + 4 - 2y) H⁺ + (x + 4 - 2y) e⁻ → CHₓO_{y} + (2 - y) H₂O (2)

At first consideration, it may seem plausible to simply separate and vent the CO₂ from exhaled air inside the breathing protection system, and use the device for regenerating O₂. However, there are several problems with this approach that demand an approach that integrates both the O₂ regeneration and the CO₂ removal. First, photon absorption leads to liberation of exactly one electron (e⁻, negative charge) and one hole (h⁺, positive charge). If the hole is consumed in the oxidation of water to O₂, then in order to balance the consumed positive charge, the electrons that are liberated by photon absorption must also be consumed in some chemical reaction. Free electrons are.highly unstable, so simply venting them to the environment is not an option. If they are simply allowed to accumulate in the PDEC device, the resulting charge imbalance would prevent any current, either electrons or holes, from flowing in the device.

These electrons could be used to reduce H⁺ or H₂O to hydrogen, H₂, but this has several significant safety disadvantages. H₂ is a non-condensable gas that is highly flammable, forms explosive mixtures with air, and bums with an invisible flame. In addition, it is a Joule-Thompson inverted gas under ordinary conditions. In other words, it undergoes warming with positive feedback upon venting, and under the right conditions, can get hot enough to autoignite. In addition, most CO₂ separation techniques are equilibrium processes that rely on the concentration gradient between the exhaled air (40,000 ppm CO₂) and outside atmosphere (ca. 300 ppm). If the CO₂ were simply vented from the device in an enclosed environment, its concentration on the outside of the respiratory protection device could build up to concentrations high enough to prevent the CO₂ separation system from working effectively. This would result in accumulation of CO₂ inside the breathing apparatus, thus effectively defeating its purpose.

By contrast, electrochemical reduction of the CO₂ offers choices from a wide variety of possible effluents, either disposable or reusable, with different properties. If H₂ generation were deemed a technically desirable option, it would primarily be useful as a non-disposable effluent, most likely as a fuel for use in an integrated fuel cell.

Migration of the H⁺ ions from the O₂ generation subsystem to the CO₂ fixation subsystem is then necessary to complete the mass-balance of the device.

The respiratory protection device is designed for the regeneration of O₂ from exhaled H₂O vapor, and removal (fixation) of CO₂. Oxygen generation is accomplished directly at the surface of the photocatalyst by the holes liberated by photon absorption. This leads to highly efficient use of light energy to generate O₂. However, O₂ generation efficiency is still limited by the ability of holes and electrons to migrate away from each other in space, since recombination of h⁺ and e⁻ with the release of waste heat represents a major source of cell inefficiency.

An additional efficiency arises from the fact that the O₂ produced in PDEC devices can be formed at elevated pressures. The PDEC device thus uses light energy to both produce and pressurize oxygen to useful levels. This novel "photopressurization" allows production of breathable gas at essentially any required total pressure and O₂ partial pressure without the energy-draining use of pumps, valves, regulators and other equipment. More efficient and faster charge separation (h⁺, e⁻) in the photocatalyst results in faster O₂ generation at higher pressures, and less conversion of light energy to waste heat.
The objectives of the photolytically-energized chemical reactions are to capture C, O, and H from expired CO₂ and H₂O to form O₂ and an effluent of various possible compositions that can be based on the user's requirements. Depending on the operating conditions envisioned for the breathing protection device, options exist for the formation of a wide range of both volatile and non-volatile carbon-containing effluents, and a range of amounts of O₂ generated per CO₂/H₂O consumed. Possible illustrative examples are given in Equations (3) and (4).

y hν + CO₂ + H₂O → 1/6 C₆H₁₂O₆ + O₂ (3)

y hν + CO₂ + 2 H₂O → CH₃OH + 3/2 O₂ (4)

Here, hv represents light energy (photons) with wavelengths in the range of 345-750 nm, depending on the photocatalyst film selected. Equation (3) shows an example of a possible disposable, non-hazardous effluent, and Equation (4) shows an example of a potential useful product - in this case, a fuel cell fuel.

Since each photon absorption event leads to exactly one free electron and one "hole" (i.e., the number of free electrons and "holes" is always equal), the ratio of O₂ generated (theoretically, one molecule per two photons absorbed according to the stoichiometry of Equations (1) and (2) and CO₂ fixed (theoretically, one molecule per x+4-2y photons absorbed) will depend on the formula of the carbon-containing effluent. The ratio of the number of O₂ and CHₓO_{y} molecules formed, to the theoretical numbers of these products is referred to as the "quantum yield" of the system, symbolized by Φ. This will depend on the efficiency of the generation of h⁺ and e⁻, on the chemical yield of the oxidation and reductions that occur at the surfaces of the anode and cathode, and on other non-idealities such as premature re-combination of these h⁺ and e⁻ to generate waste heat. Quantum yields for photochemical processes are frequently significantly less than 1, and in this case, will have a strong effect on the size, weight, power demand, etc., of the inventive breathing protection system.

The ability of the PDEC technology to efficiently generate oxygen and remove carbon dioxide enables its application to closed-loop respiration. PDEC technology takes advantage of the fact that photons of visible and UVA light have sufficient energy to thermodynamically convert very stable compounds such as CO₂ and H₂O. As an example, photosynthesis uses solar photons to effect similar chemical changes, demonstrating the solid thermodynamic basis upon which PDEC technology stands. In this manner, PDEC technology emulates biology. The fundamental photo-electrochemistry of green plant photosynthesis is the bio-inspiration for the fundamental physical chemistry of the PDEC design. The major difference is that PDEC utilizes robust ceramic, metallic, optical, and electrolytic materials, coupled with compact robust integrated circuit fabrication techniques, rather than the sensitive and dilute biomolecules of green plants. This difference enables a PDEC-based system to deliver high reliability in environments too harsh for a biologically-based system to function for long periods of time.

For the option where the device produces a disposable effluent, the most desirable reduced CO₂ product would have the following features:
1. Nonhazardous
2. Not a volatile organic compound (VOC)
3. Readily formed (i.e., low overpotential and low voltage requirement) at the PDEC cell cathode
4. Capable of being processed at high concentration (high system capacity, fast response time, small size)
5. Formed in high yield.

On the other hand, for the option where the device produces a reusable effluent, the desirable features of the effluent will depend on its specific use. For example, if the use is as a fuel cell fuel, the effluent would need to be compatible with known or readily developed fuel cell technologies.

Fundamentally, the PDEC cell as applied to the breathing protection device will simultaneously generate breathing O₂ and fix CO₂ into reduced carbon-containing material. Exhaled breath contains about 40,000 ppm CO₂, compared to about 350 ppm for air, and so provides a strong concentration gradient for a fast and high-yielding CO₂ fixation reaction. Therefore, little if any preconcentration of CO₂ content may be required for the inventive breathing protection system.

Many electrochemical cells involve the use of a semi-permeable cation exchange membrane, that allows the passage of charged species to facilitate charge balance within the cell. However, even permeable membranes impede the flow of charges somewhat, causing a voltage drop in the cell. In order to address such a drop in the PDEC design, the anolyte and catholyte may or may not be divided by a cation exchange membrane (CEM), depending on the anolyte and catholyte chemistry selected. If the CEM is eliminated, it enables the PDEC system to develop higher cell voltages, and therefore higher CO₂ reaction (fixation) rates, and access to deeper reduction processes that are not accessible at lower voltages.

For war fighters operating in the field, the issues of electrical power consumption, weight, size, and physiological burden (including breathing resistance, comfort, and heat load) imposed by any piece of equipment they are required to use are of critical importance. These issues also are all strongly interrelated.

Because this system has an air bladder to collect exhaled air for decarboxylation and re-oxygenation, and to re-supply that air for inhalation, breathing resistance should be substantially reduced compared to the current negative-pressure air-purifying respirators. In addition, the inventive technology uses only one consumable - electrical power - which should eliminate the logistics burden of supplying and maintaining air filtering cartridges in the field. Finally, use as a belt-mounted or shoulder-mounted unit with hoses delivering air to a mask facepiece, eliminates air purifying cartridges that are directly in the line of sight of the wearer will lead to substantially improved visibility and dexterity.

Power, weight, size, and heat load, and thus their physiological effect on the wearer, are critically dependent on one major factor: the quantum yield for the generation of O₂ and the removal of CO₂. This is defined by (molecules of O₂ generated + molecules of CO₂ removed)/(photons of light absorbed). For every photon that is absorbed but that does not lead to productive chemical conversion, extra electric power is consumed and converted to extra heat. In addition, the unproductive absorption of photons means that the unit must have a larger surface area to absorb the extra photons and the light source must be larger. Therefore quantum yield is a major consideration.

Heat load imposed on the system user is important. In a closed breathing system, and especially with electrochemical processes, buildup of heat and/or humidity can lead to ergonomic problems when the device is used for long periods. Use of current techniques, such as ice packs for cooling of the recycled breathing air to remove heat and humidity may work well for short missions, but will likely present significant logistics challenges for longer missions. Alternatively, it may be possible to use some form of cooling technology, either standard compressed fluid expansion or more efficient solid-state (Peltier), for heat removal.

Finally, it is worth noting that, while one embodiment is disclosed for a single-person breathing protection system, it is ideally suited for sustaining breathable atmospheres in multi-person systems as well. Such potential uses are collective breathing protection systems for use in various land vehicles such as tanks, and high-mobility multi-wheeled vehicles as well as aircraft and submarines.

The PDEC photocatalyst provides direct photo production and pressurization of O₂, removal of H₂O from the purge gas stream, and an electrochemical power source for CO₂ fixation. Absorption of light energy by the photocatalyst (from an embedded concealed lamp or other source) promotes electrons of the robust ceramic device into the conductance band of the photocatalyst. This provides "holes" to oxidize water to O₂ and H⁺ and causes DC electric current to flow. The liberated electrons are used at a specially designed gas permeable cathode to convert CO₂ to a reduced carbon-containing product.

The key system-level requirements are:
1. Continuously sustain CO₂ removal rate from the breathing atmosphere equivalent to the amount exhausted by an active adult (25 mg/s [range of 8 to 60 mg/s]).
2. Produce a disposable, non-volatile compound or usable fuel from the removed CO₂ and H₂O.

The inventive breathing protection device relies on electrochemical reduction of expired CO₂ by the free electrons generated by interaction of the photocatalyst with light. Because of the recent interest in green technologies and the influence of greenhouse gases such as CO₂ on global climate, much good science has been carried out and published in the area of CO₂ fixation, and much of that in the area of electrochemical reduction of CO₂ to a wide variety of products. It is clear from much of this science that the electrochemical fixation requires CO₂ concentrations that are either neat or, at the least, substantially greater than that in the air and in exhaled breathing air.

The entire gas flow stream may be treated continuously or treatment of a slipstream may be used if more efficient. The slipstream system may be more proficient in maintaining healthy CO₂ levels in the protective equipment.

### Oxygen production photocatalyst subsystem.

The photocatalyst provides the electrochemical power source for CO₂ fixation, O₂ production and pressurization, and H₂O removal from the purge gas stream. Absorption of light energy by the photocatalyst promotes electrons to the conductance band of the catalyst, causing an electrical current to flow, and allows the "holes" left behind to oxidize water to O₂ and H⁺. Liberated electrons are then carried via an external conductor to the cathode, converting CO₂ to reduced carbon products. Compact size and low power consumption are critical parameters. Efficiency of the charge separation step within the catalyst film determines the parameters controlling the ultimate size, weight, and power demands of the finished module for the breathing device.

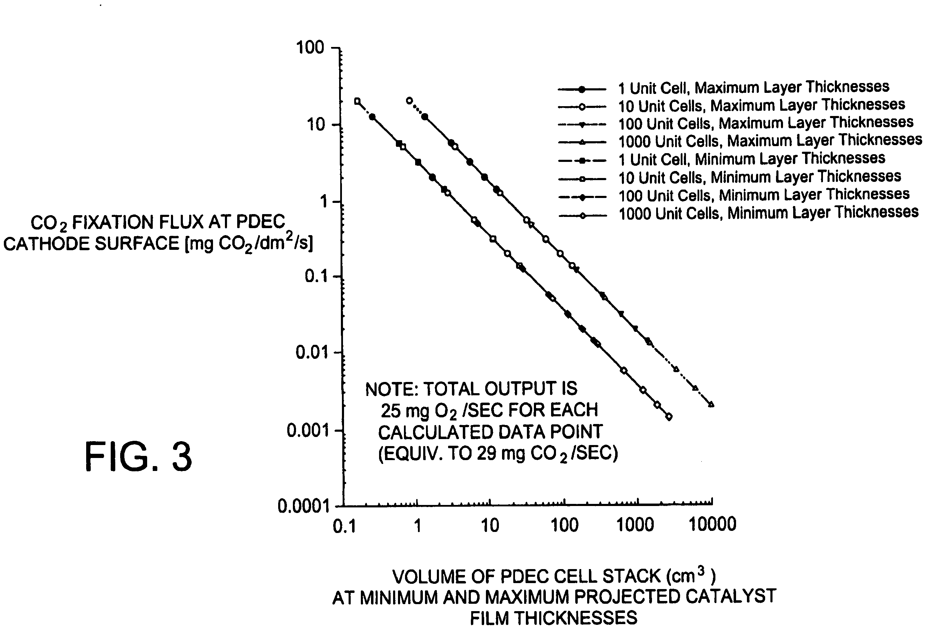

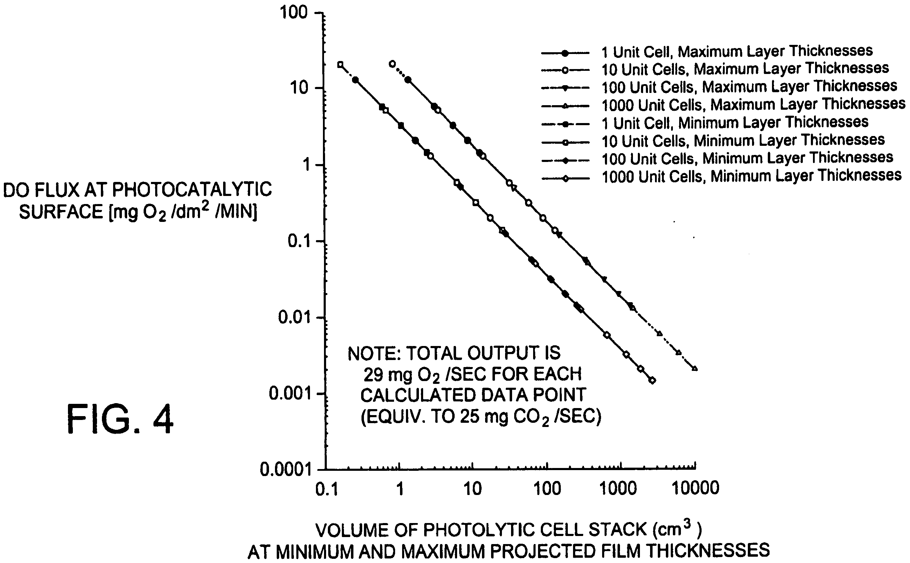

The graphs in Figure 3 and Figure 4 illustrate the preliminary O₂ and CO₂ flux modeling relationship projected for a single person breathing-gas maintenance application employing the inventive PDEC technology. Only the size, in cm³, of the cell stack is shown in these figures (not the lamp, any pumps, or power supply). Note that the size of the cell stack (x-axis) includes both anode and cathode (i.e., both O₂ generation and CO₂ fixation) volume, so they are not added together. Therefore, the projected size of the PDEC device required is calculated to be reasonable, e.g., ≤ 1000 cc (1 dm³, or ca. 61 in³) over most of the flux values (y-axis) given. These flux values are selected to remain within realistic values based on actual optimized industrial operations, such as batteries, electro-surface finishing, electroplating, or fuel cells. The quantum yield (Φ) for the calculations associated with Figure 3 and Figure 4 was tentatively assigned a value of 1.0.

### Electrochemical carbon dioxide fixation subsystem

The primary design requirements for the CO₂ fixation subsystem focus on the cathode material. When the CO₂ has been separated from the breathing gas, it will undergo fixation to reduced carbon products. Unlike current rebreather technology, the CO₂ is not adsorbed for storage in the inventive system. Alternatively, the CO₂ is continuously removed in a non-exhaustible manner by the PDEC-powered CO₂ fixation module, with power to the unit maintained. If power to the CO₂ mitigation unit is turned off or temporarily lost, the system should self-reestablish normal function of CO₂ removal upon power recovery.

Elements to be considered for the cathode include chemical composition and physical structure. The cathode could be made from soft metals (tin, zinc, etc.) that are plated or alloyed. At least one reasonable CO₂ fixation product ("reduced carbon compound") is used. Also two electrochemical cathodic processes can be used as preferred: (1) direct capture of CO₂ by carbanion electrically generated from the cathode, and (2) direct electrochemical reduction of inorganic forms of CO₂ [e.g., CO₂(g), CO_{2(aq)}, HCO₃⁻_{(aq)}, H₂CO_{3(aq)}, or CO₃⁼_{(aq)}] to form reduced carbon compounds. Powdered carbon as the reduced product is preferably avoided, to avoid a dusty product. For example, alcohols or polymers are believed to be desirable reduced carbon products. Many product materials are available for either of these electro-chemical treatment routes. 98 possible products/compounds have been identified from industry and the literature. From these resources, a short list of candidates for laboratory screening purposes can be selected. Key parameters for design of the electro-chemical CO₂ fixation system consist of the voltage (including over voltage), current density, electrode materials, and cell operational requirements to accomplish the desired reduction.

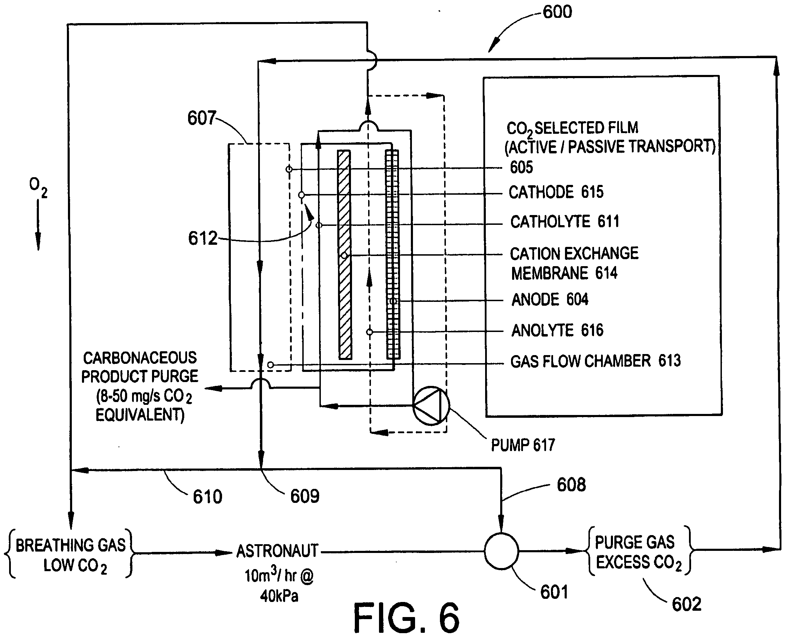

One embodiment includes a electrochemical gas cathode using a single-stage design concept as shown in Figure 6. This single-stage design offers compactness and simplicity. Major components of this design include a CO₂-selective passive or active membrane to separate CO₂ from the exhausted breathing air, a photocatalytic anode at which O₂ is generated, and a cathode that reduces CO₂ to exhaustible or useful products (CO₂ fixation). A cation exchange membrane separates the electrodes and selectively allows H⁺ ions, generated at the anode from H₂O, to migrate to the cathode and participate in CO₂ reduction. Pressurized O₂ is generated at the anode, and water is removed, providing a means to reduce relative humidity.

If the single-stage design is not effective, a second option is a two-stage design. In the two-stage design, CO₂ is separated from the device gases using an enclosed gas/liquid exchange system. Then the CO₂-rich feed from this unit is carried to a separate cell, where O₂ generation and CO₂ reduction/fixation are carried out in a photo-electrochemical cell.

### Details of the Various Embodiments

As discussed previously, the present invention uses light energy to simultaneously generate oxygen and electrical energy while removing CO₂ and water from the breathing atmosphere or a spent fuel gas stream. The invention enables the construction of a device that, when integrated as a closed system, can essentially close the mass balance on the respiration or fuel cell gas maintenance cycle and can be sized to accommodate the maximum expected CO₂ and/or H₂O production rate of one or more users. For example, astronauts generate about 50 mg/s of carbon as carbon dioxide. As another example in a spacesuit application in the Martian environment, the system would use a compact, portable laser or other lamp light source that would require only electrical power (Figure 2A and Figure 2B). Thus, one aspect of the spacesuit system does not require ambient light (including solar energy) to operate. However, for other applications such as a space vehicle or a habitat module, the system could be configured to use ambient light as the energy source. The lamp or laser could be powered electrically using solar, nuclear reactor, thermal nuclear, wind, battery or other well known in the art means for electricity generation. The system 200 of the invention does not require the use of a sorption canister to absorb carbon dioxide. Important to space travel, moon settlement and/or Martian surface use the technology provides a means of recycling onboard carbon and avoiding carbon losses (e.g. as CO₂). Various embodiments of the system are applicable to: 1) spacesuits, pressurized rovers and habitat modules for the surfaces of Mars and the Moon, 2) orbiting and in-space transfer vehicles, and 3) a lunar or Martian lander. The system also has great potential as a backup system for a Crew Exploration Vehicle (CEV).

Referring now to Figure 2A, this figure illustrates a typical PDEC unit for warfare or other applications according to the invention wherein oxygen generation occurs first followed by carbon dioxide removal. Exhaled air flows to a gas flow chamber where oxygen is produced from water typically the water in the breath or from a supplemental supply of water at a permeable anode (+). The gas enriched in oxygen flows to a second gas flow chamber where carbon dioxide is removed through a first permeable membrane. The carbon dioxide enters another chamber on the other side of first permeable membrane. The carbon dioxide reacts with hydrogen ions and other reactants on the cathode to produce {C(H₂O)}ₓ products. The gas depleted in carbon dioxide exits the second gas flow chamber and flows to an air bladder before flowing to a user interface. The user interface may be a helmet, mask, enclosed suit, or other enclosure adapted for humans or living things. In some embodiments a rebreathing type valve may be used in the user interface. An optional on demand oxygen tank can be used as illustrated.

Typical contents of exhaled air before regeneration, after, oxygen generation, and after carbon dioxide removal are shown. An insulated conductor typically connects the anode to the cathode to facilitate the flow of electrons, involved in oxygen generation, between the anode and the cathode. This works because the anode is typically an oxide layer such as TiO₂. The electrolyte can be liquid or solid state. An optional membrane that allows hydrogen ions to flow through is used between the anode chamber and the cathode chamber. Typical liquid electrolytes are salt solutions such as NaCl, phosphate salts, or acids or bases such as sulfonate, sulfuric acid, trifolates, KOH, and the like. Additional electrolyte is supplied as needed.

When a solid state electrolyte is used the optional membrane between the anode and cathode chamber is typically not present or needed. In some embodiments the anode and cathode chamber may be very thin so that the anode and cathode are in close proximity. Typical solid state electrolytes include sulfonated perfluorinated polyether, sulfonated polyether and the like.

The cathode may contain various metals that aid in the production of carbonaceous products such as Pb, Cu, or graphite. For example lead facilitates the production of formate, copper facilitates the production of methanol, formate, methane, and ethane.

Referring now to Figure 2B, this figure illustrates a typical PDEC unit for warfare or other applications according to another aspect of the invention wherein carbon dioxide removal occurs first followed by oxygen generation. Further details of this embodiment are discussed and illustrated in Figure 2A and the text associated with Figure 2A above. An optional on demand oxygen tank can be used as illustrated.

In a further aspect of the invention pressurized oxygen is produced by the cell according to the invention.

Figure 3 illustrates an embodiment for a closed loop breathing system for a spacesuit. For the spacesuit application, the system can use ambient light or a compact, portable laser light source that would require only electrical power. Thus, this system does not require ambient light to operate. This is important in hazardous applications such as firefighting or in mine rescue operations. However, the spacesuit, space vehicle, rover, habitat module, and the like can be configured to use ambient light as the energy source. Because the preferred system does not use a sorption canister, CO₂ will not be vented to the outside environment and resources are conserved. The system appears applicable to: 1) spacesuits, pressurized rovers and habitat modules for the surfaces of the Moon and Mars, 2) orbiting and in-space transfer vehicles, and 3) a lunar or Martian Lander. The system also has great potential as a backup system for a Crew Exploration Vehicle (CEV).

A breathing atmosphere in a closed environment such as a spacesuit, space vehicle, lunar rover, or lunar habitat module can consist of blends of oxygen (O₂), water (H₂O), CO₂, and inert gases, with the exact ratio and the precise mass a function of the atmospheric pressure inside the closed environment. Expelled breathing atmosphere within the closed environment, enriched in CO₂ and reduced in O₂, is circulated to the breathing atmosphere regeneration system to capture the CO₂ and water vapor and to separate them from the O₂ and inert gas components. Simultaneously, O₂ is generated and reintroduced into the breathing atmosphere. The output of the system is a refreshed breathing atmosphere that can be delivered to gas storage and then released on demand.

The fully scaled breathing atmosphere regeneration system can be sized to achieve a rate of CO₂ removal from the helmet equal to the metabolic production rate of CO₂, measuring a mean of 25 mg/s, with a minimum of 8 mg/s and a maximum of 50 mg/s. The fully developed system can be targeted to consume less than 50 watts electrical power and be able to operate for extended periods, well beyond the 8-hour requirement currently envisioned for spacesuit systems.

In addition to providing an efficient method of breathing-atmosphere regeneration, the effluents output by the system can be captured for reuse. The CO₂ and H₂O that are separated from the breathing atmosphere can be chemically converted into oxygen and alcohols that can be used as feedstock for a PEM fuel cell. Methanol and ethanol are typical and likely outputs of the air regeneration system since these fuels have the potential for multiple uses on the lunar and Martian surface as feedstock for a fuel cell and as fuel for a rocket. This carbon re-use feature enables true closed-loop recycling of precious resources and greatly reduces the cost and complexity of the logistics necessary for space exploration.

The PDEC-based system can further enable human space exploration, greatly surpassing the capabilities of any existing technology or system currently available. The system is expected to continuously regenerate a breathable atmosphere without the need for LiOH canisters or other absorbers that have limited life and create major logistics problems due to the need to constantly re-supply them. Any requirements associated with the pressure and composition of the outside atmosphere are obviated, because the system eliminates the need to vent CO₂ gas to the outside environment.

The disclosed PDEC-based system will further enable human space exploration by replacing a consumption/throw-away process with a continuously recycle that typically surpasses the capabilities of other existing technology or system currently available. The disclosed system will continuously regenerate a breathable atmosphere and /or regenerated fuel inside the spacesuit, or other confined spaces without the need for LiOH canisters or other absorbers that have limited life and create major logistics and cost problems due to the need to constantly re-supply them. Requirements associated with the pressure and composition of the outside atmosphere are obviated, for example by back pressure of high CO₂ levels in the Martian environment, fire fighting, aboard submarines, aboard rescue craft, and the like because the system eliminates the need to vent CO₂ gas to the outside environment.

### EXAMPLE 1

A spacesuit breathing atmosphere can consist of blends of oxygen (O₂), water (H₂O), CO₂, and inert gases, with the exact ratio dependent on the use environment and the precise mass and a function of the spacesuit pressure. Expelled breathing atmosphere within the spacesuit helmet, greatly enriched in CO₂ and somewhat reduced in O₂, is circulated to the breathing atmosphere regeneration system of the invention to capture or "fix" at least a portion of the CO₂ and water vapor and to separate them from the O₂ and inert gas components. Simultaneously, in series or parallel, O₂ is generated and reintroduced into the breathing atmosphere. The output of the system is a refreshed breathing atmosphere that is used directly and/or delivered to gas storage and then released to the suit on demand. This O₂ gas and fixed CO₂ can also be used for other purposes such as fuel cells.

The fully scaled breathing atmosphere regeneration system is typically sized to achieve a rate of CO₂ removal from a space suit or a fire fighters suit or a like helmet equal to the catabolic production rate of CO₂, measuring a mean of 25 mg/s for space suit applications, with a minimum of 8 mg/s and a maximum of 50 mg/s. The fully developed system typically consumes less than 50 watts electrical power and is able to operate for extended periods of time, well beyond the 8-hour requirement currently envisioned for spacesuit systems.

### EXAMPLE 2

In addition to providing an efficient method of breathing-atmosphere regeneration, a unique feature of the invention is that the effluents output by the system are most preferably captured for reuse. The CO₂ and H₂O that are separated from the breathing atmosphere will be chemically converted into O₂ and a protonated reduced product that is collected and has future value to the astronaut(s). Such a product includes organic compounds that can be readily used as foodstuffs (e.g., carbohydrates, fatty acids) or fuel (e.g. ether(s), esters, H₂, alcohols and the like) for a fuel cell or combustion. This carbon and H re-use feature enables true closed-loop recycling of precious life-support resources and greatly reduces the cost and complexity of the logistics necessary for long distance (e.g. lunar or Mars) space exploration.

The system typically provides for spacesuit requirements for use on the surfaces of the Moon and Mars, as well as in the vacuum of space. The resulting system can also be readily transferred to the other previously mentioned space exploration applications such as rover, habitat module spacecraft, space station, and the like. Typical system level attributes are: Reduced system mass and volume
Continuously sustain CO₂ removal rate from the breathing atmosphere equivalent to the amount exhausted by an active adult (25 mg/s {range of 8 to 50 mg/s}) from the helmet in a breathing atmosphere vent flow rate of 10 m³/hr (40 kPa), with the balance containing mostly O₂ at a high RH).
Operate for 8-hour periods per use in prevailing Mars ambient pressures of 4 to 9 kPa, with operating pressures of up to 40 kPa
Consume fewer than 50 watts of continuous electrical power
Configurable in a two-failure-tolerant design
Operate in low gravitational fields
Operate in a high (95%) CO₂ partial pressure environment (4 to 9 kPa total ambient pressure)
Accommodate walking, physical exertion, and other bodily motions
Produce a disposable, or preferably reusable, compound from the removed CO₂ and H₂O
The unit is typically re-usable over several years of use.

The quantum and electrochemical efficiencies of the anodic and cathodic chemistries respectively involved with this system determine the design parameters controlling the ultimate size, weight, and power demands of the finished wearable module for the spacesuit application. The anode and cathode assembly construction materials, with associated breathing and product gas handling hardware, have the greatest impact on the system's CO₂ conversion and O₂ production performance.

One aspect of the system consists of the following four major subsystems:
1. CO₂ separation or preconcentration subsystem (optional if using a gas permeable cathode);
2. CO₂ fixation subsystem (primarily consisting of a cathode for producing H₂ and/or reducing CO₂ electrochemically);
3. Photocatalyst subsystem (for O₂ and electrical current production); and
4. Hardware that integrates these subsystems into an operational system (balance of device).

### CO₂ Separation Subsystem

The CO₂ separation subsystem extracts the CO₂ from a gas stream flowing from a source of the carbon dioxide. In a space suit the flow is typically expected be about 10 m³/hr (40 kPa) (STP) gas stream flowing from the helmet. This gas stream carries up to 50 mg/s of excess CO₂. Several embodiments for separation include CO₂ separation technology options selected from one or more synergistic combinations of the following options: (1) passive selective polymer membrane; (2) active transport membrane, including nanoporous electro-deionization (EDI) membrane; (3) microporous support liquid membrane (SLM) based on a non-volatile, amine-based carrier, thin liquid film; and/or (4) a unique non-membrane approach using a gas scrubber design employing a continuously regenerated, immobilized, non-volatile liquid film. The separation options are selected for each application type of the invention based on CO₂ capture efficiency, CO₂ membrane transport rate, and fit to the CO₂ fixation subsystem. Typically carbon dioxide separation includes preconcentration of carbon dioxide separation by a method as discussed above .

### CO₂ Fixation Subsystem Development and Cathodes

The primary design requirements for the CO₂ fixation subsystem focus on the cathode. When the CO₂ has been separated from the breathing gas, it undergoes fixation to non-CO₂ carbonaceous material. Optionally, the CO₂ can be absorbed for storage in the system to be held until CO₂ fixation operation is available and powered. Alternatively, the CO₂ is continuously removed in a non-exhaustible manner by the PDEC-powered CO₂ fixation module. If power is turned off or lost temporarily, the system will self-reestablish normal function of CO₂ removal upon power recovery. Surge volume capacities for feed materials and products are selected to provide this surge capacity.

Elements to be considered for the cathode include physical structure and chemical composition. The cathode is typically made from soft metals (tin, zinc, cadmium, lead, graphite, Pt, Pd, Hg, Ag, etc.) that are used monolithically or plated or alloyed to an underlying basis metal. At least one reasonable CO₂ fixation product material ("reduced carbon compound") is produced.

Table 1 of a related pending application contains examples of such reduced carbon compounds that are effective (refer to PCT Application No. PCT/US06/34004, for Power Device and Oxygen Generator, Bruce F. Monzyk et al., filed August 31, 2006). These candidates fall into four cases: Case I if the direct reduction of CO_{2(g)} or carbonic acid or CO_{2 (aq)} to a C, product; Case II is the electrochemical reduction of a bicarbonate or carbonate ion to a C, product; Case III is the case where the CO₂ starting material (present as any combination of CO_{2(g)}, CO_{2(aq)}, carbonic acid (H₂CO₃), HCO₃⁻ or CO₃²⁻) reacts with a Cn carbonion generated at the cathode to generate a Cₙ₊₁ compound or higher; Case IV is the case where H₂ or hydride is formed at the cathode along with hydroxide ion, then the hydroxide ion reacts with the CO₂ in one or more of its neutral forms (CO_{2(g)}, CO_{2(g)} or H₂CO₃) and H₂O to produce HCO₃⁻ or CO₃²⁻ , and where the H₂ is the product fuel or H₂ and/or the hydride is allowed to react with a reducable carbonaceous compound, a reducible inorganic material alone or in combination to produce usable foods and fuels that are chemically in reduced and/or hydrogenated states. Table 1 provides examples of such compounds. The compounds of Table 1 are exemplary only and are not to be construed to representing only limits as to the candidate compounds that might be used. Also, two electrochemical cathodic processes: (1) direct capture of CO₂ by carbanion electrically generated from the cathode and (2) the direct electrochemical reduction of inorganic forms of CO₂ (e.g., CO_{2(g)}, CO_{2(aq)}, HCO₃⁻ _{(aq)}, H₂CO_{3(aq)}, or CO₃⁼_{(aq)}) to form reduced carbon compounds. Powdered carbon is one reduced carbon that can be formed. Alcohols, aldehydes, esters, ethers, olefins or polymers of these are also desirable reduced carbon products.

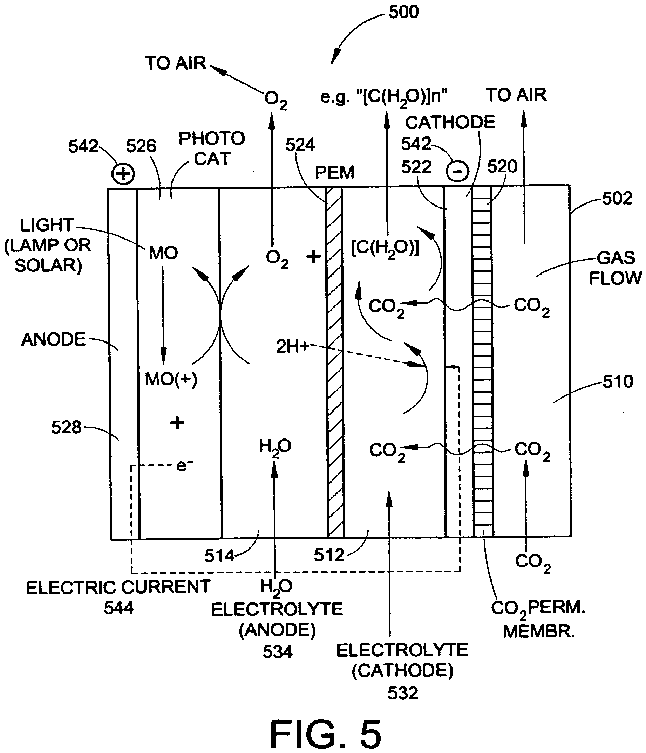

Referring now to Figure 5, this figure shows details of one aspect of a PDEC cell using a gas permeable membrane. The system 500 allows the flow of carbon dioxide directly though the system. The system 500 has an enclosure 502 that contains the gas flow chamber 510, cathode chamber 512, and anode chamber 514. One side of the gas flow chamber 512 is bounded by a gas permeable membrane 520, that is adjacent to a permeable cathode 522, that also is one boundary of cathode chamber 512. A permeable membrane (PEM) 524 between the cathode chamber 512 and anode chamber 514. The permeable membrane 524 provides for hydrogen ion flow from the anode chamber 514 to the cathode chamber. A photo catalyst 526 forms the other boundary for the anode chamber 514. Adjacent to the photo catalyst 526 is the anode 528 that is transparent for the purpose of conducting light to the photo catalyst. The electrolyte 532 flowing through the cathode chamber 512 may be the same or different from the electrolyte 534 flowing through the anode chamber 514. When the system 500 is in operation light impinging the photo catalyst 526 splits water in the anode compartment that is in contact with the photo catalyst 526 and produces oxygen that is subsequently used by the astronaut or other user. The hydrogen ion that is produce then migrates to the cathode compartment and to the cathode 522. Gas flow into the gas flow chamber 510 brings carbon dioxide produced by the inhabitants or from other processes . The carbon dioxide flows through the gas permeable membrane 520 through the cathode 522 and reacts at the cathode wall to form higher products that effectively remove the carbon dioxide. The gas flow exits the chamber 510 and can be recirculated to a user since it still contains oxygen and other gases. Typically it can be mixed with oxygen produced in the anode chamber 514. A voltage source 542 (+ and - )that produces a flow of current 540 in addition to light is typically required to drive the reactions.

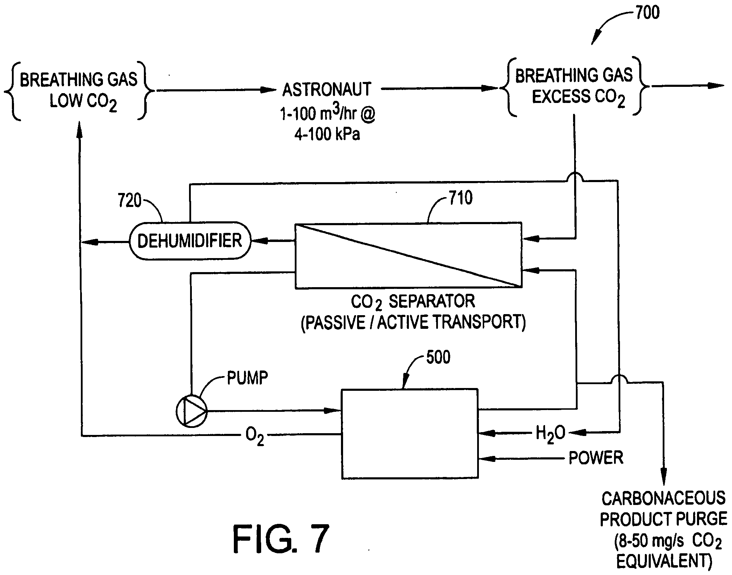

Referring now to Figure 6 and 7, variants of two fundamentally different versions of the electrochemical gas cathode can be used. Option A is a single-step design concept (Figure 3). Major components of this design include a CO₂-selective passive or active membrane to separate the CO₂ from the helmet purge gas, a photocatalytic anode where O₂ is generated and returned to the helmet inlet gas, and a cathode that reduces CO₂ to carbonaceous materials, preferably useful products (CO₂ fixation). A cation exchange membrane separates the electrodes and selectively allows H⁺ ions from water, generated at the anode, through to migrate to the cathode to participate in the CO₂ reduction. In a most preferred version of the invention, pressurized O₂ is generated at the anode. Water is removed when O₂ is produced and CO₂ is reduced (and/or H₂ is produced), providing a means to reduce relative humidity of the breathing air or flue gas exhaust.

The second option, illustrated in Figure 7, is a two-step design. CO₂ is separated from the helmet gases using an enclosed gas/liquid exchange system. Then the CO₂-rich liquid from this unit is carried to a separate cell, where O₂ generation and CO₂ reduction/fixation are carried out in a modified electrochemical cell.

Referring again to Figure 6, Figure 6 illustrates a most preferred embodiment of the invention. The figure shows multi-layered stack of materials designed to convert CO2, for example as contained in breathing air purged from a confined space or other volume of air being, or to be, breathed by one or more humans and or animals.. Such confined breathing situation arise in situation involving space suits, manned space vehicles and manned space station, lunar and Martian space facilities of all types, peoples and animals in confined or quarantined or toxic/fouled air situations such as in welding, in coal, metals, and other mining, large chemical tank cleanout, asphalt production plants and use, and the like, under water applications such as scuba diving, submarines, underwater rescue craft, and under water facilities of all types, in fire fighting and rescue, around chemical spills of trucks, pipelines, rail cars, shipping, and the like, in dusty work areas such as agriculture. In these and similar settings the breathing air needs to be recirculated such to maintain CO2 and relative humidity (RH) levels within safe and comfort levels respectively. The CO2 level of air is about 300 ppm (v/v) (0.03 vol%) and a variable RH of 40-70 %, and often 10 to essentially 100%. However, exhaled air from the human lung is about 4 vol% (40,000 ppm) and is very humid (essentially 100%). Hence air in confined space rapidly accumulates CO2 to beyond safe levels, even at normal breathing rates. Since atmospheric PO2 is already high (PO2=21 vol% at 0.20 atm, and at less pressure, but still >0.05 atm, in space applications), and since the human can function at 02 levels at much lower than 0.2 atm, or much higher, exhaled stale air still contains plenty of 02 for breathing, it is the CO2 level that needs to be controlled closely and kept low, and yet control at low levels is the most difficult to accomplish. Hence the breathing rate is normally controlled by CO2 levels and not 02 levels. The CO2 level being too high is very toxic to humans and animals due to its acidic nature, causing pH of the blood to drop and thereby causing enzymes to fail in their critical reactions in the body. The rise of PCO2 in the breathing space decreases the amount of CO2 that can be exhaled via the lung which then decreases the amount of CO2 that can be exhaled via the lung which then decreases the amount of CO2 removed from the blood to the lung due to increased CO2 back pressure. Hence in is critical that CO2 be continuously removed to about < 600 ppm, and preferably to ≤ 300 ppm so that it helps dilute the breathing air in use environment. In addition the P02 level needs to be maintained at sufficient levels. Figures A illustrates how the invention accomplishes this O2 and CO2 balance in confined breathing space situations without forming or accumulating lithium carbonate waste product. Following below is a description as to how this is accomplished by the invention.

First, the invention consists of a air pump 601 that purges at least a part of the confined breathing air (1-100 m3/hr at 4-100 kPa) enriched in CO2 (for example 500-1000 ppm) and partially depleted in 02 (for example < 0.2 atm, or < 0.01 atm) 602. This purge gas is pumped, using pump 601, which can be the same pump circulating the breathing air within the confined space, to a container within which there is located one, a and preferably more, cells 603. Note that 603 shows one cell or "unit cell". Such cells consist of a multi-layer or laminant of several materials such as electrodes, metal oxides, membranes, as described below, and these unit cells can be used individually but preferably they are combined in parallel as "cell stacks" to further increase productivity so that many unit cells can operate in unison to a achieve very high production rates of O2 and high removal rates for CO2 and of moisture. Such interconnected sets of unit cells are referred to as "cell stacks". Cell stacks can contain 1-10,000 unit cells, but more often contain 1-1000 unit cells (Figures 3 and 4), and most preferably only contain 4-200 unit cells. The number of unit cells used per stack depend on the total amount of CO2 that needs to be processed per unit time (the productivity per unit area of anode 604 and cathode 615 (the "y" axis of the plots of Figure 3 and 4), the desired "x and "y" dimensions of the cell , where any additional productivity per cell stack is obtained by expanding in the "z" direction by adding more unit cells to the cell stack (Figures 3 and 4). Figure 3 provides the size of the cell stack needed for one human being (25 mg CO2/sec collected and processed). Figure C provides this information for the equivalent amount of 02 production needed for the 02 consumption rate of one human being (29 mg 02/sec).

The specific operation of each unit cell in the cell stack is the same and as follows. The stale air 602 is passed through a narrow gas flow chamber 613 through the cell stack entering at 607. The walls of this gas flow chamber consist of CO2-selective permeation membrane 605 that removes at least a portion of the CO2 from the stale air stream. CO2 gas separation selectivity by competitive molecular gas diffusion of such membranes is already known by the medical field. Therefore CO2 separation from the inlet gas can be achieved either by the known method of 1) passively by gas phase competitive molecular diffusion, or by known methods using active transport mechanisms. In the later case the CO2 separates by diffusion after chemical sorption reaction to cause its absorption into the membrane's gas or liquid-filled, or solid pores. After sorption, the sorbed species in both cases diffuse away from the high CO2 stale air (concentration gradient driven) to cause permeation of the CO2 species through the membrane away from the gas stream (and hence physically removing CO2 from the gas stream). Once the CO2 sorbed species reaches the other side of the membrane (facing the cathode), then either the CO2 is released as a gas by Perevaporation, or it forms as a solution of one or more of the following species: CO2(aq), H2CO3(aq), HC03- and/or C03(2-). The sorption reaction could have also involved formation of these species at the inlet side of the membrane pore, or anywhere within the pores or porosity of the membrane.

Supported liquid membranes with pores filled with non- or low- volatility amines are particularly good active transport reagents. Passive membrane separations require more membrane surface area but are kinetically faster than liquid-filled membranes, but the latter possess much larger sorption factors and selectivities. Hence either membrane type is satisfactory. In this manner the gas continuously being passed through the gas flow chamber becomes depleted in CO2 while O2 and inert gases (normally N2 or Ar) pass right through the unit cell and exits with the exit gas 606.

The exiting gas, now depleted in CO2 and some moisture is at least partially refreshed and can be stored or, more preferably, immediately recycled back to the confined breathing air space as needed to maintain steady and low CO2 concentrations. The ratio of fraction of sweet air sent to storage or to the breathing space is determined by optional proportional valve 609. The product air can also be recirculated through the cell stack to produce sweet air of even lower CO2 residual.

As is well known in the art, flow rate ratios, and counter-current flowing arrangement, of the stale gas feed flow with respect to the strip catholyte (for active transport), or Perevaporation (passive transport) will enhance gas separation productivity and are so-used in this invention. The fresh air return is 610.

Within the unit cell, the sorbed CO2 is chemically "fixed" at the cathode 615 directly and/or indirectly within the catholyte 611 by reacting with one or more intermediate reducing agents supplied by generation, and preferably regeneration, at the cathode. Suitable cathode and catholyte electrolyte materials have been previously described in our prior application and are included herein by reference.

When CO₂(gas) is provide by the CO₂-selective diffusion based membrane 605, then the cathode is most preferably of the gas permeable type to allow CO₂(g) to flow from the CO₂(g) permeable membrane 605, through the pores of the cathode, to the electrochemical active surface 612 facing the anode 604. When the CO2(g) is converted to electrolyte - soluble species, it converts from CO2(g) to CO2(aq), which is in equilibrium with carbonic acid, H2C03(aq), bicarbonate ion (HC03-), and carbonate ion (C03=). Collectively, these carbon species represent fully oxidized carbon, or C(IV), species. At the cathode of the invention, and or within the catholyte of the invention, this carbon is reduced from the oxidation state of C(IV) to compounds of carbon containing the oxidation states of one or more of C(III), C(II), C(I), C(0), C(-I), C(-II), C(-III), and/or C(-IV), including any mixtures of these compounds. These compounds are collectively referred to as "carbonaceous" compounds. Examples of carbonaceous chemical compounds representing thee reduced oxidation states of carbon are provided in our previous application and are usually organic compounds, for example aliphatics, especially oxygenated aliphatics, aldehydes such as paraformaldehyde, formaldehyde, methane, carbohydrates, ethers, esters, formic acid, aromatic compounds, especially oxygenated aromatic compounds, preferably carboxylic compounds and their salts, alcohols, ketones, and the like. The reduced carbon products can also be inorganic, namely carbon monoxide (CO), graphic carbon and carbenes.

The hydrogen atoms needed for the production of these organic compounds are derived from the proton exchange membrane or positive ion exchange membrane 614 (both represented by PEM) and arise from the water (moisture, or RH) of the stale air and/or provided separately to the aqueous electrolyte, normally via electrolyte surge vessel 617. These reduces carbonaceous compounds are stored or disposed or reused of, preferably as product liquid, but also can be solids and gases. For in-space applications, recycle of this material is important as recycled C, H and O values.

The breathing air is also optionally and most preferably refortified with 02(gas) that is co-produced by the unit cell and cell stack of the invention in parallel to the above described CO2 fixation activity and within the same cells. Details describing this 02 production by the photocatalyst are available from our previous patent application. In summary, the photocatalyst anode 604 is illuminated by light from one or more lamps, lasers, or from solar radiation, or by any combination of these, including solar radiation by day and then by powered lamp or laser when dark. For 02 generation the water from anolyte 616 is separated at the photocatalyst using the photolytic energy described into 02(gas), electrons, and hydrogen ions. The high energy of the photons used (UV and visible light) make this transformation energetically possible despite the high thermodynamic stability of water and of CO2. We note that Photosynthesis by green plants also is based on these energetics. All three of the products are used to maintain breathing atmospheres in limited space. The 02 is immediately useful to replace the stale air of depleted 02. The electrons are collected and so represent an electrical current than are supplied to the cathode 615 at a reduction potential sufficient to enable the above referenced electrochemical reduction chemical reactions to occur at cathode 615.

The hydrogen ions released by the photolysis reaction referred to above are formed in the anolyte 616 adjacent to the photocatalyst anode 604 and then they very rapidly transported, by faster-than-diffusion-rates using the well characterized "hopping" mechanism characteristic of this ion, to and through the PEM 614. From the PEM the H+ ions enter the catholyte 611 and thereby supply H+ ions for chemical reaction within the catholyte 611 and/or at the surface of cathode 612. The conductive, metallic, or graphitic cathode 612 can be a gas permeable as described previously, a screen, or a nonporous solid.

The electrolytes referred to above, 611 and 616, can have a broad range of acceptable compositions and need not be the same fluid but it is most preferred that they are so that two reservoirs and two pumps can be replaced with just one each. The discriminating electrolyte is the catholyte as the anode only require access by water into the photocatalyst. Examples of such electrolytes are the water soluble combinations of cations (hydrogen ion and the following metal ions: alkali, alkaline earth, transition metals, rare earths, gallium, and aluminum), specifically U, Na, K, Cs, Rb, Mg, Ca, Tl, Fe, Ni, Cu, Zn, Al, Ga, Co, and complexes and chelates of these metal ions.

Anions are selected for these electrolytes from the list hydroxides, oxides, sulfates, chlorides, bromides, organic sulfonates, phosphates, organic phosphonates, borates, carboxylates, including acetates, iodides,

In addition, redox active catalysts are useful in the catholyte formulation, including ferrocyanide ion, ferrocyanide ion, Bipyridyl complexes of ruthenium (Ru), other Ru complexes, oxalates, transaction metal ion complexes of EDTA, NTA, CyDTA, and other aminocarboxylates chelates, and the like. Aminophosphonate chelates are also effective for catalyzing cathodic reactions of the invention.

The electrolyte is useful over a wide range of aqueous concentration liquids and gels of concentrations > 0.0005 molar (M), preferably > 0.005 M and most preferably > 0.05 M. Maximum concentrations are 50-70 wt %.

Although the single-step design is preferable due to its compactness and simplicity, the two-step design concentrates the CO₂/CO₃⁼ for the cathode thereby enabling the use of a smaller PDEC cell. As is well known in the art, the sensors, controls, and supporting hardware are added to support the final subsystem design. The design of the CO₂ fixation subsystem involves range-finding and down selection of the design option for subsystem refinement. When the design has been selected, systematic statistical experimental design and the range-finding results from the preliminary design phase are used to identify the best mode of operation of the subsystem and estimates of the associated set points, control windows, and process control requirements. This information is then used to prepare a process schematic of the selected CO₂-fixation process with mass balance data. This information serves as input to the final system-level engineering construction activity where energy balances are also added.

In one embodiment shown in Figure 7 the system 700 uses a PDEC unit 500 that operates in conjunction with a carbon dioxide separator 710. The separator 710 concentrates the carbon dioxide and provides for improved performance. A dehumidifier 720 is typically used to remove excess moisture. Photocatalyst Subsystem Development.

The PDEC photocatalyst provides the electro-chemical power source for CO₂ fixation, O₂ production and optional pressurization, and H₂O removal from the feed gas stream. Absorption of light energy by the photocatalyst promotes electrons to the conductance band of the catalyst causing an electrical current to flow, and thereby provides the "holes" left behind to oxidize water to O₂ and to liberate H⁺ ions. Liberated electrons are then carried via an external or internal conductor to the cathode where they are consumed in reducing CO₂ to reduced carbon, or "carbonaceous" products with the consumption of the H⁺ ions. For the spacesuit application, compact size and low power consumption are critical design parameters. Efficiency of the charge separation step within the photocatalyst film determines the critical design parameters by controlling the ultimate size, weight, and power demands of the finished module for the spacesuit (modeled in Figure 5). Specifically, the quantum yield is efficiently designed in, using vacuum thin film fabrication techniques (sputter coating, chemical vapor deposition, epitaxial deposition, etc.) and related fabrication techniques, features and elements that are well established to optimize yields of photon absorption, film adhesion, charge separation, internal electrical conductivity, and energy transformation.

Figures 3 and 4 illustrate the preliminary O₂ and CO₂ flux relationship for a single spacesuit breathing-gas maintenance application employing the invention. These figures give only the size, in cm³, of the cell stack needed to produce the needed amount of O₂ and fix the needed amount of CO₂ for one astronaut. This size is the cell stack only and does not include the lamp, pump, or power supply. Note that the size of the cell stack (x-axis) includes both anode and cathode (i.e., both O₂ generation and CO₂ fixation) volume. Therefore, the projected size of the PDEC device required for maintaining one astronaut is calculated to be reasonable, e.g., ≤ 1000 cc over most of the flux values (y-axis) given. These flux values were selected to remain within realistic values based on actual optimized industrial operations, such as batteries, electro-surface finishing, electroplating, or fuel cells. These plots are useful to help guide development of the specific photocatalyst. The quantum yield (Φ) for the modeling calculations of Figures 3 and 4 was assigned a value of 1.0 and so the cell stack size needs to be adjusted linearly for actual measured values.

### Balance of System

There may be one or more variations of balance of system to be balanced so that all operate smoothly as an integrated unit. Balance-of-system elements include pumps, sensors, surge vessels, controls, valves, and lines.

### System Integration

With the continuous-flow breathing-gas regeneration system in place, a series of statistically designed parametric tests (SDPT) are normally performed. These designs are based on randomized, statistically designed experimentation produced using commercially available computer software (e.g. Design Expert^{®}). The input "factors" for the design are based on the previous component development effort, supplying the factor range values for "high," "low," "center point," and "fixed" value settings for the SDPT. As the first step for the SDPT, an initial set of randomized range finding tests are run at continuous CO₂-laden breathing-gas flow conditions to verify the input parameters and confirm that all key parameters are under control. Such data are invaluable for projecting the performance of the CO₂ mitigation technology with respect to device size, weight, and power requirements.

## Claims

1. A photolytically energized electrochemical cell comprising:
a first gas flow chamber containing an anode and a light activated catalyst layer disposed adjacent to the anode;
a gas permeable membrane that is selective for carbon dioxide, having a first side and a second side;
a second gas flow chamber located on the first side of the gas permeable membrane; a cathode located on the second side of the gas permeable membrane; the anode being electrically connected to the cathode; and
the first gas flow chamber and second gas flow chamber being connected to each other in series so that a gas flow entering the electrochemical cell flows through both gas flow chambers before exiting the cell.

2. The electrochemical cell of claim 1, further comprising a light transparent window disposed on the light activated catalyst.

3. The electrochemical cell of claim 1, further comprising an ion conductive membrane disposed between the anode and cathode.

4. The electrochemical cell of claim 1, further comprising a catholyte bordering the cathode.

5. The electrochemical cell of claim 1, further comprising an anolyte bordering the anode.

6. The electrochemical cell of claim 1, wherein the electrochemical cell converts carbon dioxide from the gas flow to carbonaceous materials.

7. The electrochemical cell of claim 1, further comprising a living enclosure that provides a gas flow to the gas flow chambers of the electrochemical cell.

8. The electrochemical cell of claim 1, wherein hydrogen ions flow from the anode to the cathode.

9. The electrochemical cell of claim 1, comprising an anolyte in contact with the light activated catalyst and a catholyte in contact with the cathode.

10. A closed-loop air maintenance system comprising:
a user interface for a human or animal that provides a gas flow;
an electrochemical cell comprising:
a photolytic anode and a cathode separated by a cation exchange membrane, wherein oxygen for the enclosure is generated at the photolytic anode and flows to a first gas flow chamber;
wherein carbon dioxide is reduced to a carbonaceous material at the cathode, a gas permeable membrane being disposed between the cathode and a second gas flow chamber; and
wherein the first gas flow chamber and second gas flow chamber are connected in series so that the gas flow passes through both gas flow chambers before exiting the cell.

11. The air maintenance system of claim 10, wherein the cathode is porous.

12. The air maintenance system of claim 10, further comprising an air bladder located between the user interface and the electrochemical cell for receiving gas from the electrochemical cell.

## Patentansprüche

1. Photolytisch angeregte elektrochemische Zelle, umfassend:
eine erste Gasströmungskammer, die eine Anode und eine Schicht aus einem mit Licht aktivierten Katalysator enthält, die an die Anode angrenzend angeordnet ist;
eine gasdurchlässige Membran, die für Kohlendioxid selektiv ist, mit einer ersten Seite und einer zweiten Seite;
eine zweite Gasströmungskammer, die sich auf der ersten Seite der gasdurchlässigen Membran befindet, eine Kathode, die sich auf der zweiten Seite der gasdurchlässigen Membran befindet, wobei die Anode elektrisch mit der Kathode verbunden ist, und wobei die erste Gasströmungskammer und die zweite Gasströmungskammer in Reihe miteinander verbunden sind, so daß ein in die elektrochemische Zelle gelangender Gasstrom durch beide Gasströmungskammern strömt, bevor er die Zelle verläßt.

2. Elektrochemische Zelle nach Anspruch 1, die ferner ein lichtdurchlässiges Fenster aufweist, das sich über dem mit Licht aktivierten Katalysator befindet.

3. Elektrochemische Zelle nach Anspruch 1, die ferner eine ionenleitende Membran aufweist, die sich zwischen der Anode und der Kathode befindet.

4. Elektrochemische Zelle nach Anspruch 1, die ferner einen Katholyt umfaßt, der die Kathode umrandet.

5. Elektrochemische Zelle nach Anspruch 1, die ferner einen Anolyt umfaßt, der die Anode umrandet.

6. Elektrochemische Zelle nach Anspruch 1, wobei die elektrochemische Zelle Kohlendioxid aus dem Gasstrom in kohlenstoffhaltige Materialien umwandelt.

7. Elektrochemische Zelle nach Anspruch 1, die ferner einen lebenden Einschluß aufweist, der den Gasstrom zu den Gasströmungskammer der elektrochemischen Zelle bereitstellt.

8. Elektrochemische Zelle nach Anspruch 1, wobei Wasserstoffionen von der Anode zur Kathode strömen.

9. Elektrochemische Zelle nach Anspruch 1, die einen Anolyt in Kontakt mit dem durch Licht aktivierten Katalysator und einen Katholyt in Kontakt mit der Kathode aufweist.

10. Lufterhaltungssystem mit geschlossenem Kreis, das folgendes aufweist:
eine Benutzergrenzfläche für einen Menschen oder ein Tier, die einen Gasstrom bereitstellt;
eine elektrochemische Zelle, die folgendes aufweist:
eine photolytische Anode und eine Kathode, die durch eine Kationenaustauschmembran getrennt sind, wobei Sauerstoff für den Einschluß an der photolytischen Anode erzeugt wird und zur ersten Gasströmungskamer strömt;
wobei Kohlendioxid an der Kathode zu einem kohlenstoffhaltigen Material reduziert wird, wobei sich zwischen der Kathode und der zweiten Gasströmungskammer eine gasdurchlässige Membran befindet; und
wobei die erste Gasströmungskammer und die zweite Gasströmungskammer in Reihe verbunden sind, so daß der Gasstrom vor dem Verlassen der Zelle durch beide Gasströmungskammern strömt.

11. Lufterhaltungssystem nach Anspruch 10, wobei die Kathode porös ist.

12. Lufterhaltungssystem nach Anspruch 10, das ferner eine Luftblase aufweist, die sich zwischen der Benutzergrenzfläche und der elektrochemischen Zelle befindet, um Gas aus der elektrochemischen Zelle aufzunehmen.

## Revendications

1. Cellule électrochimique alimentée par photolyse comprenant :
une première chambre d'écoulement de gaz contenant une anode et une couche catalytique activée par la lumière disposée de manière adjacente à l'anode ;
une membrane perméable aux gaz qui est sélective pour le dioxyde de carbone, ayant un premier côté et un deuxième côté ;
une deuxième chambre d'écoulement de gaz située sur le premier côté de la membrane perméable aux gaz; une cathode située sur le deuxième côté de la membrane perméable aux gaz, l'anode étant reliée électriquement à la cathode ; et
la première chambre d'écoulement de gaz et la deuxième chambre d'écoulement de gaz étant reliées l'une à l'autre en série de sorte qu'un écoulement de gaz entrant dans la cellule électrochimique circule à travers les deux chambres d'écoulement de gaz avant de sortir de la cellule.

2. Cellule électrochimique selon la revendication 1, comprenant en outre une fenêtre transparente à la lumière disposée sur le catalyseur activé par la lumière.

3. Cellule électrochimique selon la revendication 1, comprenant en outre une membrane conductrice d'ions disposée entre l'anode et la cathode.

4. Cellule électrochimique selon la revendication 1, comprenant en outre un catholyte bordant la cathode.

5. Cellule électrochimique selon la revendication 1, comprenant en outre un anolyte bordant l'anode.

6. Cellule électrochimique selon la revendication 1, laquelle cellule électrochimique convertit le dioxyde de carbone provenant de l'écoulement de gaz en matériaux carbonés.

7. Cellule électrochimique selon la revendication 1, comprenant en outre une enceinte de séjour qui fournit un écoulement de gaz aux chambres d'écoulement de gaz de la cellule électrochimique.

8. Cellule électrochimique selon la revendication 1, dans laquelle des ions hydrogène circulent à partir de l'anode vers la cathode.

9. Cellule électrochimique selon la revendication 1, comprenant un anolyte en contact avec le catalyseur activé par la lumière et un catholyte en contact avec la cathode.

10. Système de maintenance d'air en circuit fermé comprenant :
une interface utilisateur pour un humain ou un animal qui fournit un écoulement de gaz ;
une cellule électrochimique comprenant :
une anode photolytique et une cathode séparées par une membrane d'échange de cations, où de l'oxygène pour l'enceinte est généré à l'anode photolytique et s'écoule vers une première chambre d'écoulement de gaz;
où le dioxyde de carbone est réduit en un matériau carboné à la cathode, une membrane perméable aux gaz étant disposée entre la cathode et une deuxième chambre d'écoulement de gaz ; et
où la première chambre d'écoulement de gaz et la deuxième chambre d'écoulement de gaz sont reliées en série de sorte que l'écoulement de gaz passe à travers les deux chambres d'écoulement de gaz avant de sortir de la cellule.

11. Système de maintenance d'air selon la revendication 10, dans lequel la cathode est poreuse.

12. Système de maintenance d'air selon la revendication 10, comprenant en outre une vessie d'air située entre l'interface utilisateur et la cellule électrochimique pour recevoir du gaz provenant de la cellule électrochimique.
